(19) Europäisches Patentamt
European Patent Office
Office européen des brevets

(11) EP 4 535 592 A1

(12) EUROPEAN PATENT APPLICATION
published in accordance with Art. 153(4) EPC

(43) Date of publication:
09.04.2025 Bulletin 2025/15

(51) International Patent Classification (IPC):
H02J 3/38 (2006.01)    H02M 7/48 (2007.01)

(21) Application number: 22944746.1

(52) Cooperative Patent Classification (CPC):
H02J 3/32; H02J 3/38; H02M 7/48

(22) Date of filing: 30.05.2022

(86) International application number:
PCT/JP2022/021905

(87) International publication number:
WO 2023/233456 (07.12.2023 Gazette 2023/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventors:
• HAMANAKA, Kota
  Tokyo 100-8310 (JP)
• UDA, Ryosuke
  Tokyo 100-8310 (JP)
• MUKUNOKI, Kaho
  Tokyo 100-8310 (JP)
• FUJII, Toshiyuki
  Tokyo 100-8310 (JP)

(74) Representative: Witte, Weller & Partner
Patentanwälte mbB
Postfach 10 54 62
70047 Stuttgart (DE)

(54) POWER CONVERSION DEVICE AND CONTROL DEVICE

(57) A power conversion device (200) includes a power converter (20) and a control device (100). The control device includes: a DC voltage control unit (52) to generate an active power command value based on a DC voltage command value and a DC voltage of a power storage element; a power generator simulation unit (60) to simulate characteristics of a synchronous power generator based on the active power command value and active power of a power system, to generate a first angular frequency; a feedforward control unit (80) to perform feedforward computation on the active power command value, to generate a feedforward command value; a phase generation unit (85) to generate a reference phase of an output voltage of the power converter, based on the first angular frequency and the feedforward command value; and a signal generation unit (103) to generate a control signal for the power converter, based on the reference phase and a reference voltage command value.

FIG.5

EP 4 535 592 A1

**Description**

TECHNICAL FIELD

The present disclosure relates to a power conversion device and a control device.

BACKGROUND ART

In recent years, many dispersed-type power sources using renewable energy such as solar power generation facilities have been introduced into power systems. It is often the case that a dispersed-type power source is connected to a power system via a power converter. Therefore, if more dispersed-type power sources are connected to a power system, the ratio of synchronous generators connected to the power system decreases, and inertial energy in the power system decreases. Thus, there has been proposed virtual synchronous generator control that compensates for decreased inertial energy by causing a power converter to perform a behavior similar to that of a synchronous generator.

A power converter including the virtual synchronous generator control is controlled to simulate a behavior in a case where a synchronous power generator to be simulated is connected to a power system. For example, a power conversion device according to WO 2019/092877 (PTL 1) includes a control unit to control an inverter. The control unit includes a synchronous power generator simulation computation unit to perform computation for simulating a synchronous power generator, a direct current (DC) voltage monitoring unit to monitor a DC voltage to be inputted into the inverter, and a parameter value setting unit to set a parameter value used in the synchronous power generator simulation computation unit according to the DC voltage.

CITATION LIST

PATENT LITERATURE

PTL 1: WO 2019/092877

SUMMARY OF INVENTION

TECHNICAL PROBLEM

When a power converter simulates characteristics of a synchronous power generator, output active power from the power converter depends on the frequency of a power system. Further, a DC voltage of a power source (for example, a capacitor, a storage battery, or the like) connected to the power converter fluctuates according to the output active power. When the DC voltage is out of an operation range, the power converter may be stopped for protection. Accordingly, it is necessary to continue operation of the power converter by performing DC voltage control to set the DC voltage to be in the operation range and adjusting the output active power. However, when the response of the virtual synchronous generator control is not quick enough, it is not possible to speed up the DC voltage control. As a result, there has been a problem that the DC voltage may significantly deviate from the operation range, causing the power converter to be stopped for protection.

An object in an aspect of the present disclosure is to provide a power conversion device and a control device capable of improving controllability of DC voltage control in a power converter performing control that simulates a synchronous power generator.

SOLUTION TO PROBLEM

A power conversion device according to an embodiment includes a power converter to perform power conversion between a power storage element and a power system, and a control device to control the power converter. The power converter converts DC power outputted from the power storage element into alternating current (AC) power, and outputs the AC power to the power system. The control device includes: a DC voltage control unit to generate an active power command value for the power converter, based on a DC voltage command value and a DC voltage of the power storage element; a power generator simulation unit to simulate characteristics of a synchronous power generator based on the active power command value and active power of the power system, to generate a first angular frequency; a feedforward control unit to perform feedforward computation on the active power command value, to generate a feedforward command value; a phase generation unit to generate a reference phase of an output voltage of the power converter, based on the first angular frequency and the feedforward command value: and a signal generation unit to generate a control signal for the power converter, based on the reference phase and a reference voltage command value for the output voltage of the power converter.

A power conversion device according to another embodiment includes a power converter to perform power conversion between a power storage element and a power system, and a control device to control the power converter. The power converter converts DC power outputted from the power storage element into AC power, and outputs the AC power to the power system. The control device includes: a DC voltage control unit to generate an active power command value for the power converter, based on a DC voltage command value and a DC voltage of the power storage element; a power generator simulation unit to simulate characteristics of a synchronous power generator based on the active power command value and active power of the power system, to generate a first angular frequency; a phase generation unit to generate a reference phase of the power converter based on the first angular frequency; a feedforward control unit to perform feedforward computation on the active power command value, to generate a feedforward command value; a voltage command generation unit to generate a reference voltage command value for an output voltage of the power converter; a current suppression control unit to calculate, based on a detection value of an output current from the power converter and the feedforward command value, a correction value for suppressing the output current to less than or equal to a current limit value, and to generate a voltage command value for the output voltage of the power converter using the correction value and the reference voltage command value for the output voltage of the power converter; and a signal generation unit to generate a control signal for the power converter, based on the reference phase and the voltage command value.

According to still another embodiment, a control device to control a power converter to perform power conversion between a power storage element and a power system is provided. The power converter converts DC power outputted from the power storage element into AC power, and outputs the AC power to the power system. The control device includes: a DC voltage control unit to generate an active power command value for the power converter, based on a DC voltage command value and a DC voltage of the power storage element; a power generator simulation unit to simulate characteristics of a synchronous power generator based on the active power command value and active power of the power system, to generate a first angular frequency; a feedforward control unit to perform feedforward computation on the active power command value, to generate a feedforward command value; a phase generation unit to generate a reference phase of an output voltage of the power converter, based on the first angular frequency and the feedforward command value; and a signal generation unit to generate a control signal for the power converter, based on the reference phase and a reference voltage command value for the output voltage of the power converter.

According to still another embodiment, a control device to control a power converter to perform power conversion between a power storage element and a power system is provided. The power converter converts DC power outputted from the power storage element into AC power, and outputs the AC power to the power system. The control device includes: a DC voltage control unit to generate an active power command value for the power converter, based on a DC voltage command value and a DC voltage of the power storage element; a power generator simulation unit to simulate characteristics of a synchronous power generator based on the active power command value and active power of the power system, to generate a first angular frequency; a phase generation unit to generate a reference phase of the power converter based on the first angular frequency; a feedforward control unit to perform feedforward computation on the active power command value, to generate a feedforward command value; a voltage command generation unit to generate a reference voltage command value for an output voltage of the power converter; a current suppression control unit to calculate, based on a detection value of an output current from the power converter and the feedforward command value, a correction value for suppressing the output current to less than or equal to a current limit value, and to generate a voltage command value for the output voltage of the power converter using the correction value and the reference voltage command value for the output voltage of the power converter; and a signal generation unit to generate a control signal for the power converter, based on the reference phase and the voltage command value.

ADVANTAGEOUS EFFECTS OF INVENTION

According to the present disclosure, controllability of DC voltage control can be improved in a power converter performing control that simulates a synchronous power generator.

BRIEF DESCRIPTION OF DRAWINGS

Fig. 1 is a view for illustrating an example of an overall configuration of a power conversion system.
Fig. 2 is a view showing an example of a configuration of a power converter.
Fig. 3 is a view showing another example of the configuration of the power converter.
Fig. 4 is a view showing an exemplary hardware configuration of a control device.
Fig. 5 is a block diagram showing an example of a functional configuration of a command generation unit according to a first embodiment.

Fig. 6 is a block diagram showing an example of a functional configuration of a command generation unit according to a second embodiment.

Fig. 7 is a block diagram showing an example of a functional configuration of a command generation unit according to a third embodiment.

Fig. 8 is a block diagram showing an example of a configuration of a current suppression control unit.

Fig. 9 is a block diagram illustrating transfer functions of a control target of a power conversion device according to the third embodiment.

DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

[Configuration as Basis of Each Embodiment]

<Overall Configuration>

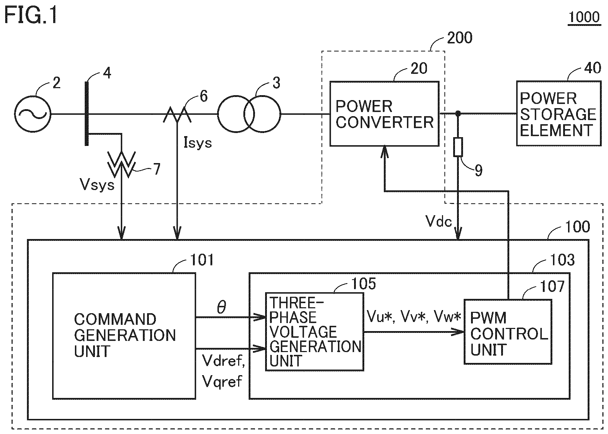

Fig. 1 is a view for illustrating an example of an overall configuration of a power conversion system. A power conversion system 1000 includes a power system 2, a voltage transformer 3, an AC current detector 6, an AC voltage detector 7, a DC voltage detector 9, a power storage element 40, and a power conversion device 200. Power conversion device 200 includes a control device 100 and a power converter 20. Power converter 20 is connected via voltage transformer 3 to an interconnection point 4 of power system 2. Typically, power system 2 is a three-phase AC power source.

Power converter 20 is a power converter that is connected to power storage element 40 and performs power conversion between power storage element 40 and power system 2. Specifically, power converter 20 converts DC power outputted from power storage element 40 into AC power, and outputs the AC power to power system 2 via voltage transformer 3. Further, power converter 20 converts AC power from power system 2 into DC power, and outputs the DC power to power storage element 40. Thereby, power converter 20 charges and discharges the power of power storage element 40. Power converter 20 is controlled as a voltage source, by control device 100.

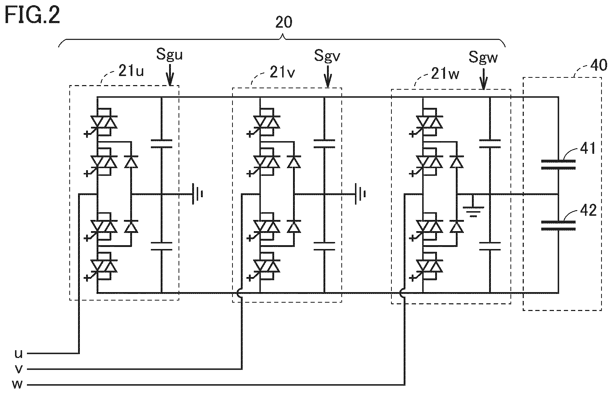

Fig. 2 is a view showing an example of a configuration of power converter 20. Referring to Fig. 2, power storage element 40 includes capacitors 41 and 42 connected in series. It should be noted that, as power storage element 40, a DC power storage element including a secondary battery is arbitrarily applicable instead of a capacitor. Power storage element 40 corresponds to one embodiment of a DC power source.

Power converter 20 has inverters 21u, 21v, and 21w as three-level converters. Each of inverters 21u, 21v, and 21w is a known configuration having four switching elements constituted by triacs, and converts a DC voltage of capacitors connected in parallel with power storage element 40 into a sinusoidal AC voltage by pulse width modulation control (PWM control) of the four switching elements. Inverter 21u is connected to a U-phase secondary winding, inverter 21v is connected to a V-phase secondary winding, and inverter 21w is connected to a W-phase secondary winding, of voltage transformer 3.

Control signals Sgu, Sgv, and Sgw to be inputted into inverters 21u, 21v, and 21w, respectively, shown in Fig. 2 each collectively indicate on/off control signals for the four switching elements (four signals) in each inverter which are generated by the PWM control.

Inverters 21u, 21v, and 21w output the sinusoidal AC voltages having phases different from one another by 120 degrees, to three-phase transmission lines, respectively. Thereby, power converter 20 operates as a three-phase three-level converter.

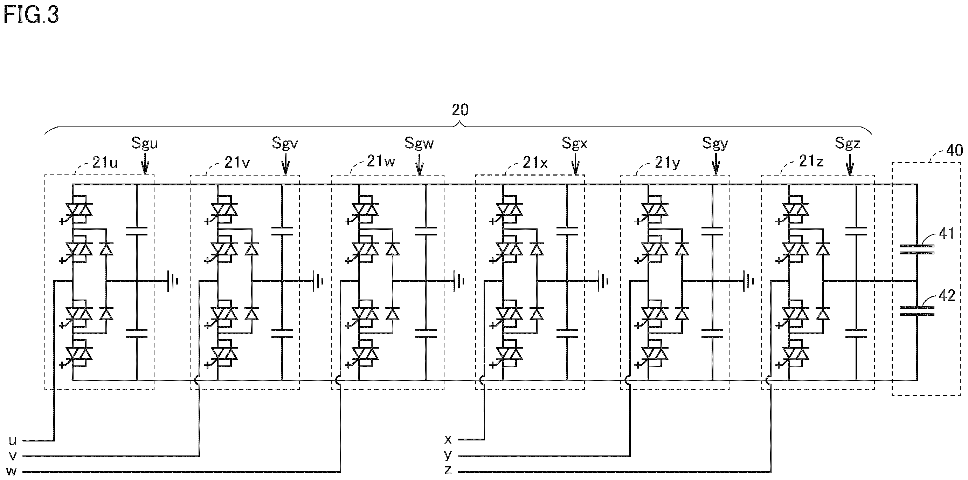

Fig. 3 is a view showing another example of the configuration of power converter 20. Power converter 20 shown in Fig. 3 further includes inverters 21x, 21y, and 21z, in addition to inverters 21u, 21v, and 21w shown in Fig. 2. Secondary windings of voltage transformer 3 are constituted by open windings. Inverters 21u and 21x are respectively connected to a positive electrode side and a negative electrode side of the U-phase secondary winding of voltage transformer 3. Inverters 21v and 21y are respectively connected to a positive electrode side and a negative electrode side of the V-phase secondary winding. Inverters 21w and 21z are respectively connected to a positive electrode side and a negative electrode side of the W-phase secondary winding.

Control signals Sgu, Sgv, Sgw, Sgx, Sgy, and Sgz to be inputted into inverters 21u, 21v, 21w, 21x, 21y, and 21z, respectively, shown in Fig. 3 each collectively indicate on/off control signals for the four switching elements in each inverter which are generated by the PWM control.

It should be noted that power converter 20 can be constituted by a self-commutated converter such as a two-level converter or a modular multilevel converter, as long as it has a DC/AC power conversion function.

Referring to Fig. 1 again, AC current detector 6 detects three-phase AC currents at interconnection point 4 between power system 2 and power converter 20. Specifically, AC current detector 6 detects a U-phase AC current Isysu, a V-phase AC current Isysv, and a W-phase AC current Isysw flowing between voltage transformer 3 and interconnection point 4. AC currents Isysu, Isysv, and Isysw (hereinafter also collectively referred to as an "AC current Isys") are inputted into control device 100.

AC voltage detector 7 detects three-phase AC voltages at interconnection point 4 of power system 2. Specifically, AC voltage detector 7 detects a U-phase AC voltage Vsysu, a V-phase AC voltage Vsysv, and a W-phase AC voltage Vsysw at interconnection point 4. AC voltages Vsysu, Vsysv, and Vsysw (hereinafter also collectively referred to as an "AC voltage Vsys") are inputted into control device 100.

DC voltage detector 9 detects a DC voltage Vdc outputted from power storage element 40. DC voltage Vdc is inputted into control device 100. It should be noted that DC voltage Vdc can also be said as a DC voltage outputted from power converter 20.

Control device 100 is a device to control operation of power converter 20. Specifically, control device 100 includes a command generation unit 101 and a signal generation unit 103, as main functional configurations. Each function of command generation unit 101 and signal generation unit 103 is implemented by processing circuitry. The processing circuitry may be dedicated hardware, or a central processing unit (CPU) that executes a program stored in an internal memory of control device 100. When the processing circuitry is dedicated hardware, the processing circuitry is constituted by a field programmable gate array (FPGA), an application specific integrated circuit (ASIC), or a combination thereof, for example.

Command generation unit 101 mainly has a function of simulating characteristics of a synchronous power generator, and generates a reference phase $\theta$ of a voltage outputted from power converter 20, and voltage command values (that is, voltage amplitude command values) Vdref and Vqref for the voltage. Reference phase $\theta$ is a phase serving as a reference used for control of power converter 20. Vdref is a d-axis voltage command value, and Vqref is a q-axis voltage command value, on a two-axis (that is, d-q axis) rotating coordinate system. Details of command generation unit 101 will be described later.

Signal generation unit 103 generates a control signal for power converter 20, based on reference phase $\theta$, d-axis voltage command value Vdref, and q-axis voltage command value Vqref (hereinafter also collectively referred to as a "voltage command value Vref") generated by command generation unit 101, and outputs the control signal to power converter 20. Specifically, signal generation unit 103 includes a three-phase voltage generation unit 105 and a PWM control unit 107.

Three-phase voltage generation unit 105 generates three-phase sinusoidal voltages Vu*, Vv*, and Vw* by two-phase/three-phase transformation, based on reference phase $\theta$, d-axis voltage command value Vdref, and q-axis voltage command value Vqref.

PWM control unit 107 performs pulse width modulation on each of three-phase sinusoidal voltages Vu*, Vv*, and Vw*, to generate a control signal as a PWM signal. For example, PWM control unit 107 generates on/off control signal Sgu, Sgv, Sgw for the four switching elements of each of inverters 21u, 21v, and 21w shown in Fig. 2. PWM control unit 107 outputs the control signal to power converter 20. Typically, the control signal is a gate control signal for controlling ON and OFF of each switching element included in power converter 20.

<Hardware Configuration>

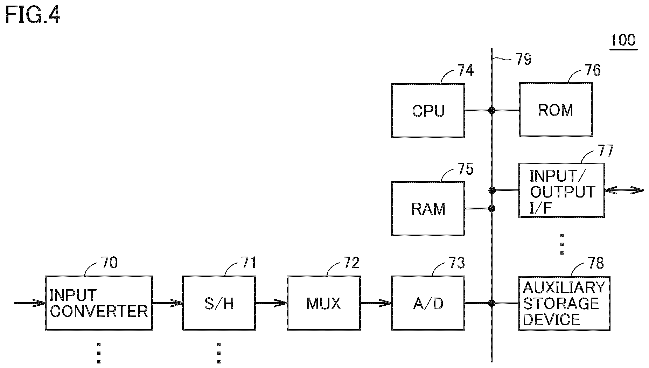

Fig. 4 is a view showing an exemplary hardware configuration of control device 100. Fig. 4 shows an example in which control device 100 is constituted by a computer.

Referring to Fig. 4, control device 100 includes one or more input converters 70, one or more sample hold (S/H) circuits 71, a multiplexer 72, an A/D converter 73, one or more CPUs 74, a random access memory (RAM) 75, a read only memory (ROM) 76, one or more input/output interfaces 77, and an auxiliary storage device 78. Further, control device 100 includes a bus 79 that mutually connects the components.

Input converter 70 has an auxiliary transformer for each input channel. Each auxiliary transformer converts a signal detected by each detector in Fig. 1 into a signal having a voltage level suitable for subsequent signal processing.

S/H circuit 71 is provided for each input converter 70. S/H circuit 71 samples a signal indicating the amount of electricity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels by providing a plurality of A/D converters 73.

CPU 74 controls entire control device 100, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electricity amount detection values, and the like.

Input/output interface 77 is an interface circuit in communicating between CPU 74 and an external device.

It should be noted that it is also possible to constitute at least a portion of control device 100 using a circuit such as an FPGA and an ASIC, unlike the example in Fig. 2.

First Embodiment.

<Configuration of Command Generation Unit>

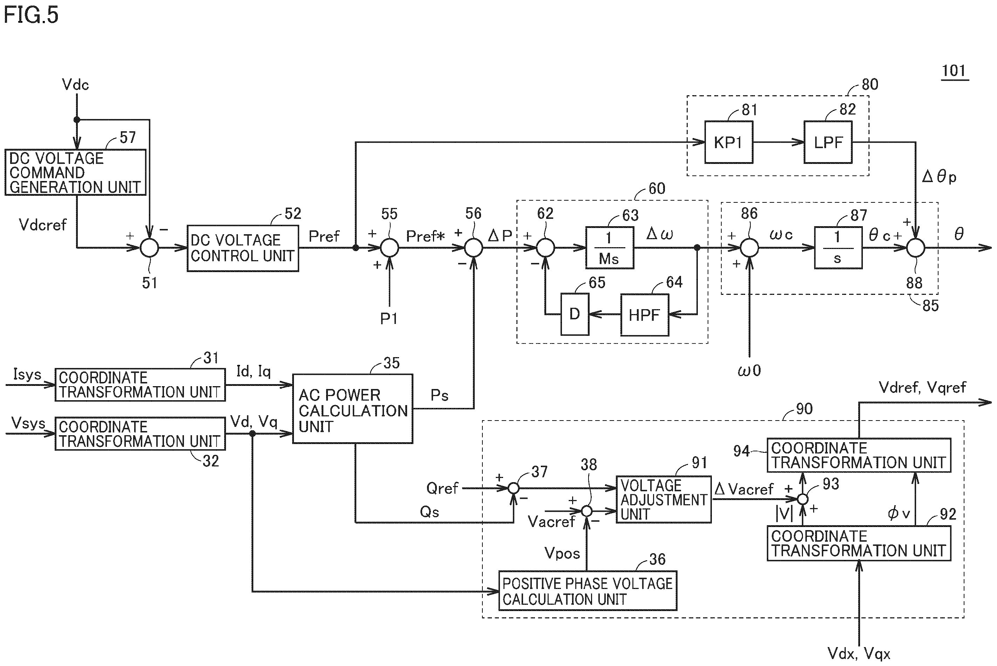

Fig. 5 is a block diagram showing an example of a functional configuration of a command generation unit according to a first embodiment. Referring to Fig. 5, command generation unit 101 includes a DC voltage control unit 52, a DC voltage command generation unit 57, a power generator simulation unit 60, a feedforward control unit 80, a phase generation unit 85, and a voltage command generation unit 90. Command generation unit 101 further includes coordinate transformation units 31 and 32, and an AC power calculation unit 35. In the following description, it is assumed that each signal is converted on a per unit (PU) basis inside control device 100 (specifically, command generation unit 101).

(Reference Phase of Output Voltage)

A functional configuration related to generation of reference phase $\theta$ of the output voltage of power converter 20 will be described.

DC voltage command generation unit 57 generates a DC voltage command value Vdcref based on detected DC voltage Vdc. Specifically, when DC voltage Vdc is in a specified voltage range (that is, a range from an upper limit value Vdcu to a lower limit value Vdcd), DC voltage command generation unit 57 sets DC voltage command value Vdcref to DC voltage Vdc.

When DC voltage Vdc is out of the specified voltage range, DC voltage command generation unit 57 sets DC voltage command value Vdcref to a limit value (for example, upper limit value Vdcu or lower limit value Vdcd) of the specified voltage range. For example, when DC voltage Vdc is higher than upper limit value Vdcu, DC voltage command generation unit 57 outputs DC voltage command value Vdcref that is set to upper limit value Vdcu, and when DC voltage Vdc is lower than lower limit value Vdcd, DC voltage command generation unit 57 outputs DC voltage command value Vdcref that is set to lower limit value Vdcd.

A subtractor 51 calculates a deviation $\Delta$Vdc (= Vdcref-Vdc) between DC voltage command value Vdcref and DC voltage Vdc.

DC voltage control unit 52 generates an active power command value Pref by feedback control, based on DC voltage command value Vdcref and DC voltage Vdc. When DC voltage Vdc is in the specified voltage range, DC voltage command value Vdcref and DC voltage Vdc have the same value, and thus deviation $\Delta$Vdc is 0. In this case, active power command value Pref to be outputted from DC voltage control unit 52 is set to 0.

On the other hand, when DC voltage Vdc is out of the specified voltage range, deviation $\Delta$Vdc is not 0. In this case, DC voltage control unit 52 outputs active power command value Pref by feedback control that causes DC voltage Vdc to follow DC voltage command value Vdcref (for example, that sets deviation $\Delta$Vdc to zero).

An adder 55 outputs an active power command value Pref* obtained by adding active power command value Pref and an active power command value P1. Active power command value P1 is generated by a governor control unit (not shown). Typically, the governor control unit calculates, based on a difference between a target angular frequency and an angular frequency of a rotor of a virtual synchronous power generator, a frequency adjustment amount corresponding to governor-free operation of the synchronous power generator when the frequency of power system 2 fluctuates, and the governor control unit outputs the frequency adjustment amount as active power command value P1. The governor-free operation is operation for eliminating frequency fluctuation in a fluctuation period (for example, a few tens of seconds to a few minutes) by outputting such a frequency adjustment amount that absorbs fluctuation in the frequency of the power system.

Further, adder 55 may be configured to further add an active power command value P2 in response to a request from a higher-level device. In this case, adder 55 adds active power command value Pref, active power command value P1, and active power command value P2, to generate active power command value Pref*. However, active power command value P1 and active power command value P2 may be configured not to be added to active power command value Pref. In this case, active power command value Pref* is active power command value Pref.

A subtractor 56 outputs a deviation $\Delta$P (= Pref*-Ps) between active power Ps calculated by AC power calculation unit 35 and active power command value Pref*.

Power generator simulation unit 60 simulates the characteristics of the synchronous power generator based on active power command value Pref* and active power Ps outputted from the power converter, to generate an angular frequency deviation $\Delta\omega$. Specifically, power generator simulation unit 60 includes a subtractor 62, an integrator 63, a high pass filter 64, and a proportioner 65.

Integrator 63 time-integrates an output value of subtractor 62, and outputs angular frequency deviation $\Delta\omega$. In Fig. 5, "M" in integrator 63 is an inertia moment (that is, an inertia constant) of the rotor of the synchronous power generator (that is, the virtual synchronous power generator) to be simulated by power generator simulation unit 60. Angular frequency deviation $\Delta\omega$ outputted by integrator 63 corresponds to a difference between an angular frequency of the rotor in the virtual synchronous power generator and a reference angular frequency $\omega0$. Reference angular frequency $\omega0$ is an angular frequency of a reference frequency (for example, 50 Hz or 60 Hz) of power in power system 2.

High pass filter 64 performs high pass filtering on angular frequency deviation $\Delta\omega$, and outputs it to proportioner 65. Proportioner 65 outputs a multiplication value "D$\times\Delta\omega$" obtained by multiplying angular frequency deviation $\Delta\omega$ subjected to the high pass filtering, by a damping factor D.

Subtractor 62 outputs a value obtained by subtracting multiplication value "D$\times\Delta\omega$" from deviation $\Delta$P, to integrator 63. Integrator 63 time-integrates the output value of subtractor 62, and thereby a damping force of the synchronous power generator in the control of power converter 20 is simulated.

Feedforward control unit 80 performs feedforward computation on active power command value Pref, to generate a feedforward command value. Specifically, feedforward control unit 80 multiplies active power command value Pref by a gain, and performs filtering for removing a high frequency component on the value multiplied by the gain, to generate a first phase command value $\Delta\theta$p. In detail, feedforward control unit 80 includes a proportioner 81 and a low pass filter 82.

Proportioner 81 outputs a multiplication value "KP1$\times$Pref" obtained by multiplying active power command value Pref by a gain KP1. Low pass filter 82 performs low pass filtering on the multiplication value, to output first phase command value $\Delta\theta$p as a feedforward command value. It should be noted that conversion from the active power command value to a phase is performed using a reactance component Xs (= $\omega$Ls) of power system 2, a power supply voltage Vs of power system 2, and AC voltage Vsys. Specifically, reactance component Xs is divided by a multiplication value obtained by multiplying power supply voltage Vs by AC voltage Vsys (that is, Vs$\times$Vsys), to calculate a division value (Xs/(Vs$\times$Vsys)). Then, the division value is multiplied by the active power command value, to calculate a phase.

Phase generation unit 85 generates reference phase $\theta$ of power converter 20, based on angular frequency deviation $\Delta\omega$ and the feedforward command value (that is, first phase command value $\Delta\theta$p). Specifically, phase generation unit 85 integrates an addition value obtained by adding angular frequency deviation $\Delta\omega$ and reference angular frequency $\omega0$, to generate a second phase command value $\theta$c, and generates an addition value obtained by adding first phase command value $\Delta\theta$p and second phase command value $\theta$c, as reference phase $\theta$. In detail, phase generation unit 85 includes an adder 86, an integrator 87, and an adder 88.

Adder 86 performs computation of adding angular frequency deviation $\Delta\omega$ outputted from integrator 63 and reference angular frequency $\omega0$. Specifically, adder 86 adds angular frequency deviation $\Delta\omega$ and reference angular frequency $\omega0$, and outputs an angular frequency $\omega$c (= $\Delta\omega+\omega0$).

Integrator 87 time-integrates angular frequency $\omega$c to generate second phase command value $\theta$c. Adder 88 adds first phase command value $\Delta\theta$p and second phase command value $\theta$c, to generate reference phase $\theta$ of the output voltage of power converter 20.

(Voltage Command Value for Output Voltage)

A functional configuration related to generation of the voltage command value (that is, the voltage amplitude command value) for the output voltage of power converter 20 will be described.

Coordinate transformation unit 31 performs three-phase/two-phase transformation on AC currents Isysu, Isysv, and Isysw using reference phase $\theta$, to generate a d-axis current Id and a q-axis current Iq. Coordinate transformation unit 32 performs three-phase/two-phase transformation on AC voltages Vsysu, Vsysv, and Vsysw using reference phase $\theta$, to generate a d-axis voltage Vd and a q-axis voltage Vq. Typically, a harmonic component is removed from d-axis current Id and q-axis current Iq, by a moving average filter or the like. Similarly, a harmonic component is removed from d-axis voltage Vd and q-axis voltage Vq, by a moving average filter or the like.

AC power calculation unit 35 calculates active power Ps and reactive power Qs at interconnection point 4, based on d-axis voltage Vd, q-axis voltage Vq, d-axis current Id, and q-axis current Iq. Active power Ps is inputted into subtractor 56, and reactive power Qs is inputted into a subtractor 37.

Voltage command generation unit 90 generates voltage command value Vref for the output voltage of power converter 20. Voltage command value Vref includes d-axis voltage command value Vdref and q-axis voltage command value Vqref. In the following description, the voltage command value generated by voltage command generation unit 90 may be referred to as a "reference voltage command value". Voltage command generation unit 90 includes a positive phase voltage calculation unit 36, subtractors 37 and 38, a voltage adjustment unit 91, coordinate transformation units 92 and 94, and an adder 93.

Positive phase voltage calculation unit 36 calculates a positive phase voltage Vpos based on d-axis voltage Vd and q-axis voltage Vq. Subtractor 37 calculates a deviation $\Delta Q$ (= Qref-Qs) between a reactive power command value Qref and reactive power Qs. Subtractor 38 calculates a deviation $\Delta Vpos$ (= Vacref-Vpos) between a system voltage command value Vacref and positive phase voltage Vpos.

Voltage adjustment unit 91 selects either an automatic reactive power adjustment mode or an automatic voltage adjustment mode, and generates a voltage amplitude adjustment amount $\Delta Vacref$ based on the selected mode. Specifically, when voltage adjustment unit 91 selects the automatic reactive power adjustment mode, voltage adjustment unit 91 generates voltage amplitude adjustment amount $\Delta Vacref$ by feedback control for setting deviation $\Delta Q$ to less than or equal to a specified value (for example, 0). When voltage adjustment unit 91 selects the automatic voltage adjustment mode, voltage adjustment unit 91 generates voltage amplitude adjustment amount $\Delta Vacref$ by feedback control for setting deviation $\Delta Vpos$ to less than or equal to a specified value (for example, 0). Voltage adjustment unit 91 is constituted by a PI controller, a first-order lag element, and the like.

Coordinate transformation unit 92 transforms a d-axis component of a specified voltage command value (that is, a specified d-axis voltage command value Vdx) and a q-axis component thereof (that is, a specified q-axis voltage command value Vqx), into an amplitude |V| and a phase $\phi v$. Specified d-axis voltage command value Vdx and specified q-axis voltage command value Vqx are values preset by a system operator or the like. Adder 93 adds amplitude |V| and voltage amplitude adjustment amount $\Delta Vacref$. Coordinate transformation unit 94 performs d-q axis transformation on amplitude |V| and phase $\phi v$, to generate d-axis voltage command value Vdref (that is, a d-axis component of reference voltage command value Vref) and q-axis voltage command value Vqref (that is, a q-axis component of reference voltage command value Vref).

<Advantage of First Embodiment>

According to the above configuration, when DC voltage Vdc is in the specified voltage range, active power command value Pref to be outputted from DC voltage control unit 52 is set to 0. In this case, power generator simulation unit 60 operates based on other active power command values (for example, active power command value P1, active power command value P2, and the like) other than active power command value Pref. Further, since active power command value Pref to be inputted into feedforward control unit 80 is 0, active power command value Pref is not reflected in first phase command value $\Delta \theta p$. Therefore, in power converter 20, DC voltage control for adjusting DC voltage Vdc is not performed.

On the other hand, when DC voltage Vdc is out of the specified voltage range, active power command value Pref for setting DC voltage Vdc to be in the specified voltage range is outputted. In this case, power generator simulation unit 60 operates based on an addition value obtained by adding active power command value Pref and other active power command values. However, since the response of power generator simulation unit 60 is relatively slow, it is not possible to quickly reflect active power command value Pref for controlling DC voltage Vdc, in reference phase $\theta$.

Accordingly, in the first embodiment, active power command value Pref is inputted into feedforward control unit 80, to generate first phase command value $\Delta \theta p$ according to active power command value Pref. Then, first phase command value $\Delta \theta p$ is reflected in reference phase $\theta$ to be generated by phase generation unit 85. Therefore, it is possible to quickly reflect the output value of DC voltage control unit 52 (that is, active power command value Pref) in reference phase $\theta$ of the output voltage of power converter 20.

As described above, according to the first embodiment, when DC voltage Vdc is out of the specified voltage range, it is possible to cause power converter 20 performing control that simulates the synchronous power generator, to quickly perform such DC voltage control that sets DC voltage Vdc to be in the specified voltage range. Therefore, controllability of DC voltage control in power converter 20 is improved.

Second Embodiment.

<Configuration of Command Value Generation Unit>

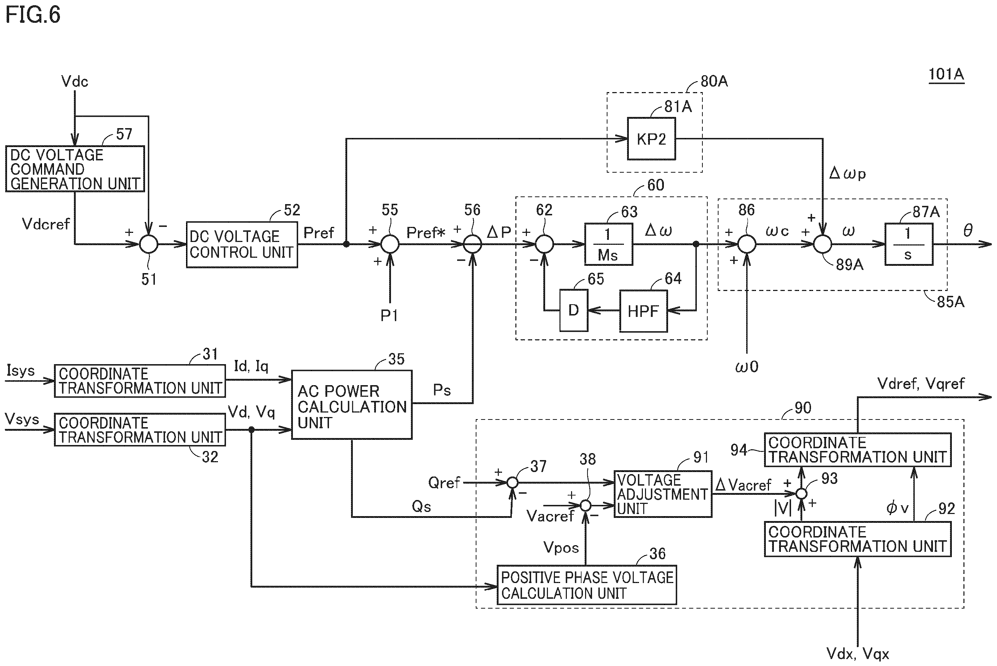

Fig. 6 is a block diagram showing an example of a functional configuration of a command generation unit according to a second embodiment. Referring to Fig. 6, a command generation unit 101A corresponds to command generation unit 101 in Fig. 5 that includes a feedforward control unit 80A instead of feedforward control unit 80, and includes a phase generation unit 85A instead of phase generation unit 85. Since a method for generating a voltage command value according to the second embodiment is the same as the generation method according to the first embodiment, detailed description thereof will not be repeated.

(Reference Phase of Output Voltage)

A method for generating a reference phase according to the second embodiment will be described. It should be noted that, for the configuration and processing similar to those in the first embodiment, detailed description thereof will not be repeated.

Feedforward control unit 80A multiplies active power command value Pref by a gain, to generate an angular frequency deviation $\Delta\omega p$ as a feedforward command value. Specifically, feedforward control unit 80A includes a proportioner 81A.

Proportioner 81A outputs a multiplication value "KP2$\times$Pref" obtained by multiplying active power command value Pref by a gain KP2. It should be noted that conversion from the active power command value to an angular frequency is performed using reactance component Xs, power supply voltage Vs, and AC voltage Vsys. Specifically, reactance component Xs is divided by a multiplication value obtained by multiplying power supply voltage Vs of power system 2 by AC voltage Vsys (that is, Vs$\times$Vsys), to calculate a division value (Xs/(Vs$\times$Vsys)). Then, a multiplication value obtained by multiplying the division value by the active power command value is differentiated, to calculate an angular frequency.

Phase generation unit 85A calculates a first addition value obtained by adding angular frequency deviation $\Delta\omega$ and reference angular frequency $\omega0$, and integrates a second addition value obtained by adding the first addition value and angular frequency deviation $\Delta\omega p$, to generate reference phase $\theta$. Specifically, phase generation unit 85A includes adder 86, an adder 89A, and an integrator 87A.

Adder 86 adds angular frequency deviation $\Delta\omega$ and reference angular frequency $\omega0$, and outputs angular frequency $\omega c$ (that is, the first addition value). Adder 89A adds angular frequency $\omega c$ and angular frequency deviation $\Delta\omega p$, and outputs an angular frequency $\omega$ (that is, the second addition value). Integrator 87A time-integrates angular frequency $\omega$ to generate reference phase $\theta$.

<Advantage of Second Embodiment>

The advantage of the second embodiment is the same as the advantage of the first embodiment.

Third Embodiment.

<Configuration of Command Value Generation Unit>

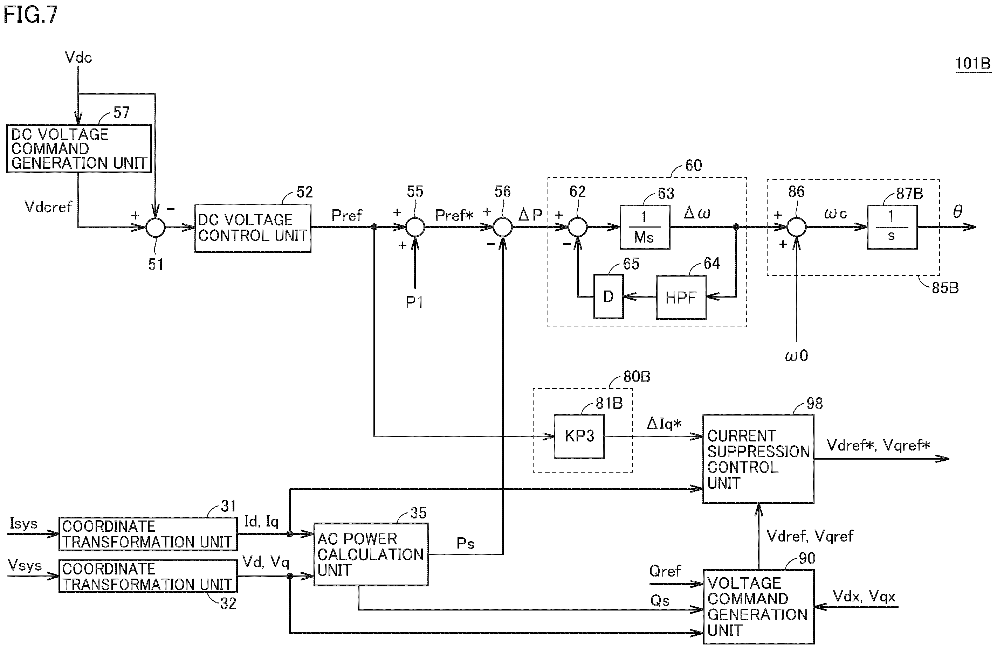

Fig. 7 is a block diagram showing an example of a functional configuration of a command generation unit according to a third embodiment. Referring to Fig. 7, a command generation unit 101B includes DC voltage control unit 52, DC voltage command generation unit 57, power generator simulation unit 60, a feedforward control unit 80B, a phase generation unit 85B, voltage command generation unit 90, and a current suppression control unit 98. Command generation unit 101 further includes coordinate transformation units 31 and 32, and AC power calculation unit 35.

(Reference Phase of Output Voltage)

A configuration related to generation of a reference phase according to the third embodiment will be described. It should be noted that, for the configuration and processing similar to those in the first embodiment, detailed description thereof will not be repeated. Unlike the first and second embodiments, in the third embodiment, feedforward computation based on active power command value Pref is not performed in generating reference phase $\theta$.

Phase generation unit 85B generates reference phase $\theta$ based on angular frequency deviation $\Delta\omega$. Specifically, phase generation unit 85B integrates angular frequency $\omega c$, which is an addition value obtained by adding angular frequency deviation $\Delta\omega$ and reference angular frequency $\omega0$, to generate reference phase $\theta$. In detail, phase generation unit 85B includes adder 86 and an integrator 87B. Integrator 87B time-integrates angular frequency $\omega c$ outputted by adder 86, to generate reference phase $\theta$.

(Voltage Command Value for Output Voltage)

A configuration related to generation of a voltage command value according to the third embodiment will be described. It should be noted that, for the configuration and processing similar to those in the first embodiment, detailed description thereof will not be repeated. Unlike the first and second embodiments, in the third embodiment, a voltage command value obtained by reflecting a correction value for suppressing a current in reference voltage command value Vref generated by voltage command generation unit 90 is generated. Here, in the present embodiment, it is assumed that, on a rotating coordinate system, a d-axis current value corresponds to a reactive current component, and a q-axis current value corresponds to an active current component.

Feedforward control unit 80B multiplies active power command value Pref by a gain, to generate an active current command value (that is, a q-axis current command value) $\Delta Iq^*$ as a feedforward command value. It should be noted that conversion from the active power command value to the active current command value is performed using power supply voltage Vs. Specifically, the active power command value is divided by power supply voltage Vs, to calculate the active current command value.

Current suppression control unit 98 calculates, based on a detection value of an output current from power converter 20 (that is, AC current Isys) and the feedforward command value (that is, active current command value ΔIq*), a correction value ΔVc for suppressing the output current to less than or equal to a current limit value. Current suppression control unit 98 generates a voltage command value Vref* for the output voltage of power converter 20 (that is, a d-axis voltage command value Vdref* and a q-axis voltage command value Vqref*) using correction value ΔVc and reference voltage command value Vref.

Signal generation unit 103 in Fig. 1 generates the control signal for power converter 20, based on reference phase θ generated by phase generation unit 85B and voltage command value Vref* generated by current suppression control unit 98.

In the following, a configuration of current suppression control unit 98 will be specifically described.

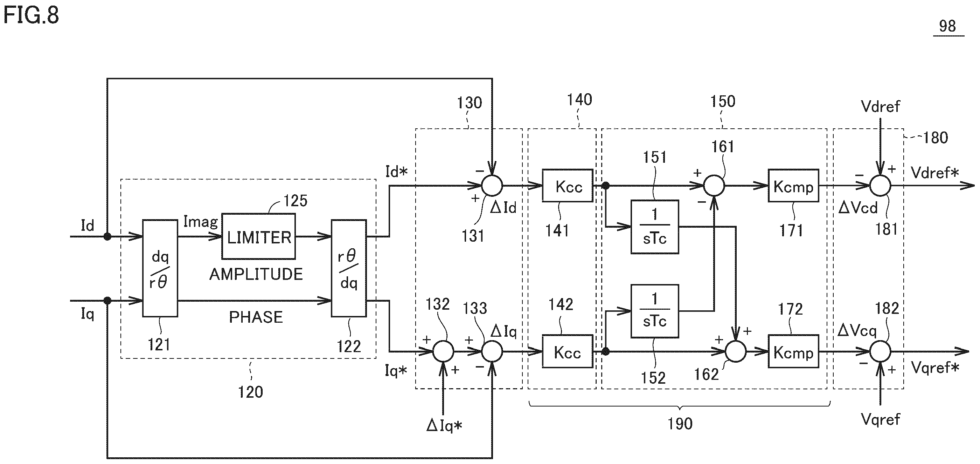

Fig. 8 is a block diagram showing an example of a configuration of the current suppression control unit. Referring to Fig. 8, current suppression control unit 98 includes a current command value generation unit 120, a deviation computation unit 130, a voltage command value correction unit 180, and a control computation unit 190.

Current command value generation unit 120 generates a d-axis current command value Id* and a q-axis current command value Iq*, based on a current limit value Imax, and d-axis current Id and q-axis current Iq obtained by performing coordinate transformation on the detection value of AC current Isys. Specifically, current command value generation unit 120 includes coordinate transformation units 121 and 122, and a limiter 125. Coordinate transformation unit 121 performs polar coordinate (rθ) transformation on d-axis current Id and q-axis current Iq on the d-q axes, and thereby outputs a current amplitude Imag and a current phase θi.

Current amplitude Imag and current phase θi are indicated by the following equations (1) and (2), using d-axis current Id and q-axis current Iq.

$$\text{Imag} = \sqrt{(\text{Id}^2 + \text{Iq}^2)} \qquad \dots (1)$$

$$\theta\text{i} = \tan^{-1}(\text{Iq/Id}) \qquad \dots (2)$$

When current amplitude Imag is more than or equal to current limit value Imax, limiter 125 outputs current limit value Imax. Further, when current amplitude Imag is less than current limit value Imax (that is, in the case of Imag < Imax), limiter 125 outputs current amplitude Imag from coordinate transformation unit 121.

Since the description is given herein on an assumption that a current amplitude of AC current Isys is equal to current amplitude Imag determined by equation (1), an upper limit value in limiter 125 is set to the same value as a current limit value of AC current Isys. However, when the three-phase/two-phase transformation in coordinate transformation unit 31 is performed such that the current amplitude of AC current Isys may be K times (K: constant) current amplitude Imag on the d-q axes determined by equation (1), the upper limit value of limiter 125 is set to (1/K) times current limit value Imax.

Coordinate transformation unit 122 uses an output value from limiter 125 as an amplitude, and transforms current phase θi outputted from coordinate transformation unit 121, from a polar coordinate into a d-q coordinate, to generate a d-axis current command value Id* and a q-axis current command value Iq*.

The ratio of q-axis current command value Iq* to d-axis current command value Id* (that is, Iq*/Id*), which corresponds to the phase of Id* and Iq*, is the same as the ratio of q-axis current Iq to d-axis current Id (that is, Iq/Id) generated from the detection value of AC current Isys. On the other hand, the amplitude of d-axis current command value Id* and q-axis current command value Iq* (that is, $\sqrt{(\text{Id}^{*2} + \text{Iq}^{*2})}$) is limited by limiter 125 to less than or equal to current limit value Imax.

Therefore, when current amplitude Imag of the output current from power converter 20 (that is, AC current Isys) is less than or equal to current limit value Imax, current command value generation unit 120 generates d-axis current Id and q-axis current Iq, as d-axis current command value Id* and q-axis current command value Iq*, respectively.

On the other hand, when current amplitude Imag is more than current limit value Imax, current command value generation unit 120 generates the d-axis current value and the q-axis current value corresponding to current limit value Imax, as the d-axis current command value and the q-axis current command value, respectively. Specifically, d-axis current command value Id* and q-axis current command value Iq* are set such that the amplitude ($\sqrt{(\text{Id}^{*2} + \text{Iq}^{*2})}$) is equal to current limit value Imax and the ratio between Id* and Iq* is the same as the ratio between Id and Iq.

Deviation computation unit 130 calculates a current deviation ΔIq between d-axis current command value Id* and d-axis current Id, and a current deviation ΔIq between q-axis current Iq and an addition value obtained by adding q-axis current command value Iq* and the feedforward command value (that is, active current command value ΔIq*). Specifically, deviation computation unit 130 has subtractors 131 and 133, and an adder 132. Subtractor 131 subtracts d-axis current Id from d-axis current command value Id* to calculate current deviation ΔId. Adder 132 adds q-axis current command value Iq* and active current command value ΔIq*. Subtractor 133 subtracts q-axis current Iq from an addition value obtained by adder 132 (Iq*+ΔIq*) to calculate current deviation ΔIq.

Control computation unit 190 calculates a correction value ΔVcd for compensating for current deviation ΔId, and a correction value ΔVcq for compensating for current deviation ΔIq, as correction value ΔVc. It should be noted that a d-axis component of correction value ΔVc is correction value ΔVcd, and a q-axis component of correction value ΔVc is correction value ΔVcq. Specifically, control computation unit 190 includes a proportional control unit 140 and a correction value calculation unit 150.

Proportional control unit 140 has proportioners 141 and 142. Proportioner 141 outputs a multiplication value MP1 (= Kcc×ΔId) obtained by multiplying current deviation ΔId outputted from subtractor 131 by a proportional gain Kcc. Proportioner 142 outputs a multiplication value MP2 (= Kcc×ΔIq) obtained by multiplying current deviation ΔIq outputted from subtractor 133 by proportional gain Kcc.

Correction value calculation unit 150 calculates correction value ΔVcd and correction value ΔVcq. Specifically, correction value calculation unit 150 calculates correction value ΔVcd based on multiplication value MP1 and an integrated value of multiplication value MP2, and calculates correction value ΔVcq based on multiplication value MP2 and an integrated value of multiplication value MP1. Specifically, correction value calculation unit 150 includes integrators 151 and 152 with a time constant Tc, a subtractor 161, an adder 162, and multipliers 171 and 172.

Integrator 151 outputs the integrated value of multiplication value MP1 outputted from proportioner 141, to adder 162. Integrator 152 outputs the integrated value of multiplication value MP2 outputted from proportioner 142, to subtractor 161.

Subtractor 161 outputs a subtraction value obtained by subtracting the integrated value of multiplication value MP2 from multiplication value MP1. Adder 162 outputs an addition value obtained by adding multiplication value MP2 and the integrated value of multiplication value MP1.

Multiplier 171 outputs a value obtained by multiplying the output value of subtractor 161 by an adjustment gain Kcmp, as correction value ΔVcd for the d-axis component of reference voltage command value Vref (that is, d-axis voltage command value Vdref). Multiplier 172 outputs a value obtained by multiplying the output value of adder 162 by adjustment gain Kcmp, as correction value ΔVcq for the q-axis component of reference voltage command value Vref (that is, q-axis voltage command value Vqref).

As a result, correction values ΔVcd and ΔVcq for the voltage command values for compensating for current deviations ΔId and ΔIq, respectively, are indicated by the following equations (3) and (4).

$$\Delta Vd = Kcmp \times Kcc(\Delta Id - \Delta Iq/(s \times Tc)) \quad \dots (3)$$

$$\Delta Vq = Kcmp \times Kcc(\Delta Iq + \Delta Id/(s \times Tc)) \quad \dots (4)$$

Voltage command value correction unit 180 calculates a d-axis component of the voltage command value for the output voltage of power converter 20 (that is, d-axis voltage command value Vdref*) using the d-axis component of reference voltage command value Vref and correction value ΔVcd, and calculates a q-axis component of the voltage command value (that is, q-axis voltage command value Vqref*) using the q-axis component of reference voltage command value Vref and correction value ΔVcq. Specifically, voltage command value correction unit 180 has subtractors 181 and 182.

Subtractor 181 subtracts correction value ΔVcd outputted from multiplier 171, from reference voltage command value Vdref generated by voltage command generation unit 90, to generate d-axis voltage command value Vdref*. Subtractor 182 subtracts correction value ΔVcq outputted from multiplier 172, from reference voltage command value Vqref generated by voltage command generation unit 90, to generate q-axis voltage command value Vqref*.

As described above, in the third embodiment, voltage command values Vdref* and Vqref* are generated by reflecting correction values ΔVd and ΔVq for compensating for current deviations ΔId and ΔIq with respect to current command values Id* and Iq*, in reference voltage command values Vdref and Vqref. Further, active current command value ΔIq* generated by feedforward control unit 80B is reflected in current deviation ΔIq.

In current command value generation unit 120, when current amplitude Imag of AC current Isys is less than or equal to current limit value Imax, current command values Id* and Iq* are set as Id* = Id and Iq* = Iq, and thus current deviations ΔId and ΔIq are set as ΔId = 0 and ΔIq = ΔIq*. Accordingly, correction value ΔVcd is set as ΔVcd = 0, and correction value ΔVcq is set as a value in which active current command value ΔIq* is reflected. In this case, reference voltage command value Vdref is set as voltage command value Vdref*, and an addition value obtained by adding reference voltage command value Vqref and correction value ΔVcq in which only active current command value ΔIq* is reflected is set as voltage command value Vqref*. Thereby, power converter 20 operates as a virtual synchronous generator while performing DC voltage control for setting DC voltage Vdc to be in the specified range.

In contrast, when current amplitude Imag of AC current Isys is more than current limit value Imax, current command values Id* and Iq* are set as command values for controlling the amplitude of AC current Isys to be equal to current limit value Imax. As a result, current deviations ΔId and ΔIq are set according to an excess of the current amplitude by d-axis current Id and q-axis current Iq over current limit value Imax. Active current command value ΔIq* is also reflected in current deviation ΔIq.

Therefore, when the amplitude of AC current Isys is more than current limit value Imax, in current suppression control unit 98, correction terms ΔVcd and ΔVcq are calculated to compensate for current deviations ΔId and ΔIq, respectively. Thereby, power converter 20 operates as a virtual synchronous generator while suppressing the current amplitude to a reference value and performing the DC voltage control.

In the example in Fig. 8, in current suppression control by current suppression control unit 98, decoupling between the d-q axes, in which correction value calculation unit 150 causes current deviation ΔId to act on correction value ΔVcq and causes current deviation ΔIq to act on correction value ΔVcd, is performed by integral control.

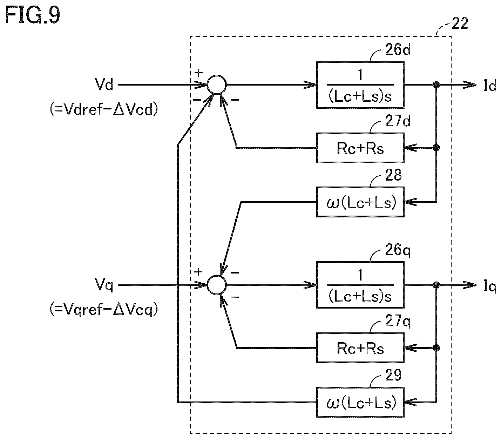

Fig. 9 is a block diagram illustrating transfer functions of a control target of a power conversion device according to the third embodiment.

Referring to Fig. 9, transfer functions of a control target 22 having the output voltage of power converter 20 as an input and AC current Isys detected by AC current detector 6 as an output is shown on d-q coordinate axes. That is, the input to control target 22 is indicated by d-axis voltage Vd and q-axis voltage Vq obtained by performing the three-phase/two-phase transformation on the output voltage of power converter 20. These d-axis voltage Vd and q-axis voltage Vq are controlled to voltage command value Vdref* (Vdref* = Vdref-ΔVcd) and voltage command value Vqref* (Vqref* = Vqref-ΔVcq) shown in Fig. 8.

The output of control target 22 is indicated by d-axis current Id and q-axis current Iq obtained by performing the three-phase/two-phase transformation on AC current Isys detected by AC current detector 6. These d-axis current Id and q-axis current Iq correspond to the output values of coordinate transformation unit 31 in Fig. 7.

Control target 22 corresponds to synthesized impedances of power converter 20 and power system 2. Therefore, transfer functions 26d, 26q, 27d, 27q, 28, and 29 between d-axis voltage Vd, q-axis voltage Vq and d-axis current Id, q-axis current Iq are defined using a resistance component Rc and an inductance component Lc of power converter 20, a resistance component Rs and an inductance component Ls of power system 2, and angular frequency ω of the output voltage of power converter 20 (AC voltage), on the d-q coordinate axes.

Transfer functions 26d and 27d indicate an interaction between d-axis voltage Vd and d-axis current Id, and transfer functions 26q and 27q indicate an interaction between q-axis voltage Vq and q-axis current Iq. The interaction by transfer functions 26d and 27d can be compensated for by feedback control that calculates voltage command value Vdref* using current deviation ΔId. Similarly, the interaction by transfer functions 26q and 27q can be compensated for by feedback control that calculates voltage command value Vqref* using current deviation ΔIq.

However, control target 22 further includes transfer function 28 by which d-axis current Id acts on q-axis voltage Vq, and transfer function 29 by which q-axis current Iq acts on d-axis voltage Vd. Therefore, decoupling is performed, in which d-axis current deviation ΔId is reflected in q-axis voltage command value Vqref* and q-axis current deviation ΔIq is reflected in q-axis voltage command value Vdref* by correction value calculation unit 150.

On the other hand, transfer functions 28 and 29 include inductance component Ls of power system 2. While inductance component Lc of power converter 20 can be estimated correctly according to a circuit constant, it is difficult to estimate inductance component Ls correctly, because it changes depending on the state of power system 2 (for example, a load state, whether or not a grounding accident occurs, the position where a grounding accident occurs, and the like).

Therefore, by calculating correction values ΔVcd and ΔVcq with the decoupling by the integral control in correction value calculation unit 150 as shown in Fig. 8, it is possible to set voltage command values Vdref* and Vqref* for compensating for current deviations ΔId and ΔIq and setting them to zero, even if inductance component Ls of power system 2 cannot be estimated correctly.

On the other hand, if inductance component Ls of power system 2 can be estimated correctly, it is also possible to implement decoupling control by proportional control using a control gain that is set according to transfer functions 28 and 29, instead of the integral control. However, when the decoupling control is performed by the proportional control, there is a concern that an estimation error of inductance component Ls may destabilize the current suppression effect by current suppression control unit 98. In contrast, in the third embodiment, by performing the decoupling control by the integral control, the current suppression effect by current suppression control unit 98 can be stabilized without requiring estimation of inductance component Ls of power system 2.

<Advantage of Third Embodiment>

According to the third embodiment, the third embodiment has the advantage of the first embodiment, and it is possible to stably perform control that suppresses occurrence of an excess current.

Other Embodiments.

The configuration illustrated as each embodiment described above is an example of the configuration of the present disclosure, and can be combined with another known technique, or can be modified, such as partially omitted, without departing from the gist of the present disclosure. Further, in each embodiment described above, the processing and configuration described in another embodiment may be appropriately adopted and implemented.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

REFERENCE SIGNS LIST

2: power system; 3: voltage transformer; 4: interconnection point; 6: AC current detector; 7: AC voltage detector; 9: DC voltage detector; 20: power converter; 21u to 21z: inverters; 22: control target; 35: AC power calculation unit; 36: positive phase voltage calculation unit; 40: power storage element; 41, 42: capacitor; 52: DC voltage control unit; 57: DC voltage command generation unit; 60: power generator simulation unit; 70: input converter; 71: sample hold circuit; 72: multiplexer; 73: A/D converter; 74: CPU; 75: RAM; 76: ROM; 77: input/output interface; 78: auxiliary storage device; 79: bus; 80, 80A, 80B: feedforward control unit; 82: low pass filter; 85, 85A, 85B: phase generation unit; 90: voltage command generation unit; 91: voltage adjustment unit; 98: current suppression control unit; 100: control device; 101, 101A, 101B: command generation unit; 103: signal generation unit; 105: three-phase voltage generation unit; 107: PWM control unit; 120: current command value generation unit; 125: limiter; 130: deviation computation unit; 140: proportional control unit; 150: correction value calculation unit; 180: voltage command value correction unit; 190: control computation unit; 200: power conversion device; 1000: power conversion system.

**Claims**

1. A power conversion device comprising:

   a power converter to perform power conversion between a power storage element and a power system; and
   a control device to control the power converter,
   the power converter converting DC power outputted from the power storage element into AC power, and outputting the AC power to the power system,
   the control device including

      a DC voltage control unit to generate an active power command value for the power converter, based on a DC voltage command value and a DC voltage of the power storage element,
      a power generator simulation unit to simulate characteristics of a synchronous power generator based on the active power command value and active power of the power system, to generate a first angular frequency,
      a feedforward control unit to perform feedforward computation on the active power command value, to generate a feedforward command value,
      a phase generation unit to generate a reference phase of an output voltage of the power converter, based on the first angular frequency and the feedforward command value, and
      a signal generation unit to generate a control signal for the power converter, based on the reference phase and a reference voltage command value for the output voltage of the power converter.

2. The power conversion device according to claim 1, wherein

   the feedforward command value includes a first phase command value, and
   the phase generation unit integrates an addition value obtained by adding the first angular frequency and a reference angular frequency, to generate a second phase command value, and generates an addition value obtained by adding the first phase command value and the second phase command value, as the reference phase.

3. The power conversion device according to claim 2, wherein the feedforward control unit multiplies the active power command value by a first gain, and performs filtering for removing a high frequency component on the value multiplied by the first gain, to generate the first phase command value.

4. The power conversion device according to claim 1, wherein

the feedforward command value includes a second angular frequency, and
the phase generation unit calculates a first addition value obtained by adding the first angular frequency and a reference angular frequency, and integrates a second addition value obtained by adding the first addition value and the second angular frequency, to generate the reference phase.

5. The power conversion device according to claim 4, wherein the feedforward control unit multiplies the active power command value by a second gain, to generate the second angular frequency.

6. A power conversion device comprising:

a power converter to perform power conversion between a power storage element and a power system; and
a control device to control the power converter,
the power converter converting DC power outputted from the power storage element into AC power, and outputting the AC power to the power system,
the control device including

a DC voltage control unit to generate an active power command value for the power converter, based on a DC voltage command value and a DC voltage of the power storage element,
a power generator simulation unit to simulate characteristics of a synchronous power generator based on the active power command value and active power of the power system, to generate a first angular frequency,
a phase generation unit to generate a reference phase of the power converter based on the first angular frequency,
a feedforward control unit to perform feedforward computation on the active power command value, to generate a feedforward command value,
a voltage command generation unit to generate a reference voltage command value for an output voltage of the power converter,
a current suppression control unit to calculate, based on a detection value of an output current from the power converter and the feedforward command value, a correction value for suppressing the output current to less than or equal to a current limit value, and to generate a voltage command value for the output voltage of the power converter using the correction value and the reference voltage command value for the output voltage of the power converter, and
a signal generation unit to generate a control signal for the power converter, based on the reference phase and the voltage command value.

7. The power conversion device according to claim 6, wherein

the current suppression control unit includes

a current command value generation unit to generate a d-axis current command value and a q-axis current command value, based on the current limit value, and a d-axis current and a q-axis current obtained by performing coordinate transformation on the detection value,
a deviation computation unit to calculate a first current deviation between the d-axis current command value and the d-axis current, and a second current deviation between the q-axis current and an addition value obtained by adding the q-axis current command value and the feedforward command value,
a control computation unit to calculate a first correction value for compensating for the first current deviation, and a second correction value for compensating for the second current deviation, as the correction value, and
a voltage command value correction unit to calculate a d-axis component of the voltage command value using a d-axis component of the reference voltage command value and the first correction value, and to calculate a q-axis component of the voltage command value using a q-axis component of the reference voltage command value and the second correction value, and

when the output current is less than or equal to the current limit value, the current command value generation unit generates the d-axis current and the q-axis current, as the d-axis current command value and the q-axis current command value, respectively, and

when the output current is more than the current limit value, the current command value generation unit generates the d-axis current and the q-axis current corresponding to the current limit value, as the d-axis current command value and the q-axis current command value, respectively.

8. The power conversion device according to claim 7, wherein

the control computation unit includes

a first proportioner to output a first multiplication value obtained by multiplying the first current deviation by a proportional gain,
a second proportioner to output a second multiplication value obtained by multiplying the second current deviation by the proportional gain, and
a correction value calculation unit for calculating the first correction value and the second correction value, and

the correction value calculation unit

calculates the first correction value based on the first multiplication value and an integrated value of the second multiplication value, and
calculates the second correction value based on the second multiplication value and an integrated value of the first multiplication value.

9. The power conversion device according to any one of claims 6 to 8, wherein the feedforward control unit multiplies the active power command value by a third gain, to generate an active current command value as the feedforward command value.

10. The power conversion device according to any one of claims 1 to 9, wherein

when the DC voltage of the power storage element is in a specified voltage range, the DC voltage command value is set to the DC voltage, and
when the DC voltage of the power storage element is out of the specified voltage range, the DC voltage command value is set to a voltage limit value of the specified voltage range.

11. A control device to control a power converter to perform power conversion between a power storage element and a power system,

the power converter converting DC power outputted from the power storage element into AC power, and outputting the AC power to the power system,
the control device comprising:

a DC voltage control unit to generate an active power command value for the power converter, based on a DC voltage command value and a DC voltage of the power storage element;
a power generator simulation unit to simulate characteristics of a synchronous power generator based on the active power command value and active power of the power system, to generate a first angular frequency;
a feedforward control unit to perform feedforward computation on the active power command value, to generate a feedforward command value;
a phase generation unit to generate a reference phase of an output voltage of the power converter, based on the first angular frequency and the feedforward command value; and
a signal generation unit to generate a control signal for the power converter, based on the reference phase and a reference voltage command value for the output voltage of the power converter.

12. A control device to control a power converter to perform power conversion between a power storage element and a power system,

the power converter converting DC power outputted from the power storage element into AC power, and outputting the AC power to the power system,
the control device comprising:

a DC voltage control unit to generate an active power command value for the power converter, based on a DC voltage command value and a DC voltage of the power storage element;

a power generator simulation unit to simulate characteristics of a synchronous power generator based on the active power command value and active power of the power system, to generate a first angular frequency;

a phase generation unit to generate a reference phase of the power converter based on the first angular frequency;

a feedforward control unit to perform feedforward computation on the active power command value, to generate a feedforward command value;

a voltage command generation unit to generate a reference voltage command value for an output voltage of the power converter;

a current suppression control unit to calculate, based on a detection value of an output current from the power converter and the feedforward command value, a correction value for suppressing the output current to less than or equal to a current limit value, and to generate a voltage command value for the output voltage of the power converter using the correction value and the reference voltage command value for the output voltage of the power converter; and

a signal generation unit to generate a control signal for the power converter, based on the reference phase and the voltage command value.

FIG.1

1000

FIG.2

FIG.3

EP 4 535 592 A1

FIG.4

FIG.5

101

DC VOLTAGE COMMAND GENERATION UNIT — 57

DC VOLTAGE CONTROL UNIT — 52

COORDINATE TRANSFORMATION UNIT — 31

COORDINATE TRANSFORMATION UNIT — 32

AC POWER CALCULATION UNIT — 35

POSITIVE PHASE VOLTAGE CALCULATION UNIT — 36

VOLTAGE ADJUSTMENT UNIT — 91

COORDINATE TRANSFORMATION UNIT — 90

COORDINATE TRANSFORMATION UNIT — 92

Vdc, Vdcref, Pref, Pref*, P1, ΔP, Pref, Ps, Id, Iq, Vd, Vq, Isys, Vsys, Qref, Qs, Vacref, Vpos, ΔVacref, |V|, φv, Vdref, Vqref, Vdx, Vqx

$\frac{1}{Ms}$ — 63, HPF — 64, D — 65

KP1 — 81, LPF — 82

$\frac{1}{s}$ — 87, ω0, ωc, θc, θ, Δθp, Δω

60, 80, 85, 86, 88, 62, 55, 56, 51, 93, 94, 37, 38

FIG.6

EP 4 535 592 A1

FIG.7

EP 4 535 592 A1

FIG.8

FIG.9

## INTERNATIONAL SEARCH REPORT

| | International application No. |
|---|---|
| | **PCT/JP2022/021905** |

| **A.** | **CLASSIFICATION OF SUBJECT MATTER** |
|---|---|

*H02J 3/38*(2006.01)i; *H02M 7/48*(2007.01)i
FI:   H02J3/38 110; H02M7/48 R

According to International Patent Classification (IPC) or to both national classification and IPC

| **B.** | **FIELDS SEARCHED** |
|---|---|

Minimum documentation searched (classification system followed by classification symbols)

H02J3/38; H02M7/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 7008892 B1 (MITSUBISHI ELECTRIC CORP.) 25 January 2022 (2022-01-25) entire text, all drawings | 1-12 |
| A | JP 7023430 B1 (MITSUBISHI ELECTRIC CORP.) 21 February 2022 (2022-02-21) entire text, all drawings | 1-12 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 July 2022** | **02 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/021905** |

| Patent document cited in search report | Publication date (day/month/year) | Patent family member(s) | Publication date (day/month/year) |
|---|---|---|---|
| JP 7008892 B1 | 25 January 2022 | (Family: none) | |
| JP 7023430 B1 | 21 February 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019092877 A